Europäisches Patentamt

European Patent Office

Office européen des brevets

(11) Publication number: **0 225 724**
**A1**

(19)

(12) # EUROPEAN PATENT APPLICATION

(21) Application number: **86308674.0**

(22) Date of filing: **06.11.86**

(51) Int. Cl.⁴: **B 60 V 3/04**

(30) Priority: **06.11.85 US 795602**

(43) Date of publication of application: **16.06.87**
Bulletin 87/25

(84) Designated Contracting States: **DE FR GB**

(71) Applicant: **U T D C INC., 33 Yonge Street, Toronto
Ontario M5E 1E7 (CA)**

(72) Inventor: **Ferrence, David N., 715 Portsmouth Avenue,
Kingston Ontario, K7M 1W6 (CA)**

(74) Representative: **Cline, Roger Ledlie et al, EDWARD
EVANS & CO. Chancery House 53-64 Chancery Lane,
London WC2A 1SD (GB)**

(54) **Compliant bearing shoe.**

(57) This invention relates to the use of a compliant load bearing shoe 74 on a transportation vehicle 64 designed to move either people or goods. The shoe 74 is designed to support a load on a cushion 96 of pressurized fluid between the shoe 74 and a track 60, where either the shoe 74 of the track 60 is adapted to inject fluid under pressure therebetween. The shoe and the track have co-operating lower and upper surfaces 73, 78 respectively, which act in concert when the shoe 74 is in use. The surface of the shoe 74 has side edge regions 90, and an intermediate region 93. Pressurized fluid is injected between the shoe and the track and the lower surface 78 of the shoe deflects so a plenum is formed between the shoe and the track. A partial seal is formed at the side edge regions 90 between the surface of the shoe and the track to limit the escape of the pressurized fluid from the plenum.

- 1 -

0225724

This invention relates to a load bearing shoe for use on a transportation vehicle used in a transportation system for moving people or goods. In particular, this invention relates to the use of a pressurized fluid, such as air, between the load bearing shoe, and the surface which the load bearing shoe passes over, such as a track, to reduce the work done against friction, thereby reducing the total energy required to move people and goods.

In recent years, various types of load supporting devices utilizing pressurized fluid have been developed for moving people or goods. These devices are generally grouped in two major classes, namely, materials handling devices, and transportation system devices. An example of a materials handling device is disclosed in United States patent No. 3,375,893 granted to Harry A. Mackie, assigned to General Motors Corporation and issued on April 2, 1968. This patent discloses a self-modulating flexible choke bearing. The invention is for a load supporting device capable of establishing and maintaining substantially frictionless omni directional mobility relative to a flat surface. The device comprises a platform, an air bladder under the platform, and a means of providing air between the air bladder and the ground surface. The bladder is filled with air, and then more air, under pressure, is introduced between the underside of the air bladder and the ground surface. As a result, the air bladder deforms to form a plenum which is sufficiently pressurized to support a load riding on the platform. As more air under pressure is introduced between the lower surface of the ground and the air bladder, the air will

- 2 -

0225724

begin to escape through gaps between the bladder and the ground created around the outer edge of the air bladder.

An example of a transportation system device is disclosed in United States patent No. 3,952,666 issued to Gladish, on April 27, 1976. Essentially Gladish discloses an air-bearing transportation system which comprises a track, curved transversely either in a concave or a convex fashion, in which rests a support member which is curved substantially in the same manner so as to mate with the curved track. However, according to the Gladish invention, the curvature of the concave element, either the track or the support member, must be larger than the curvature of the convex portion in order that the support member will be supported by pressurized air. The essence of the invention disclosed by Gladish is an "air wedge" which is created by the combined effect of two high pressure jets of air which are injected between the support and the track. The pressure maintained in the "air wedge" lifts the support member of the vehicle, and thereby the vehicle, off the track.

The present invention discloses a flexible, or compliant load bearing shoe in which control of the plenum, and thereby of the pressurized fluid between the surface of the shoe and the track is achieved by selecting the local compliance of the load bearing shoe laterally across the load bearing shoe. Variation of the compliancy of the load bearing shoe can be accomplished by either geometry selection, or material selection, or a combinatio of both.

Therefore, according to the present invention a load bearing shoe for supporting a load on a cushion of pressurized fluid between the shoe and a track, at least one of the shoe or the track being adapted to inject fluid under pressure between the shoe and the track, is disclosed and comprises the shoe having a surface adapted to co-operate with the track when the shoe is in use and the shoe having first and second side edge regions and at least one intermediate region. The intermediate region has a greater compressibility that the first and second side edge regions, so that the surface of the shoe, in use, deflects to form a plenum between the surface and the track to accommodate the cushion of pressurized fluid, and the first and second side edge regions form partial seals between the surface and the track to limit movement of fluid from the plenum.

The invention will now be more fully described with reference to the accompanying illustrations in which;

Figure 1 is an exploded perspective view of a first embodiment, namely a load bearing shoe together with a section of track,

Figure 2 is a cross sectional view taken on line 2 - 2 on Figure 1,

Figure 3 is a cross-sectional view similar to Figure 2 showing the load bearing shoe of Figure 1 in use,

- 4 -                    0225724

Figure 4 is a cross sectional view of a second embodiment of the invention, namely, a load bearing shoe on a track, and

Figure 5 is a cross sectional view of the load bearing shoe of Figure 4 in use.

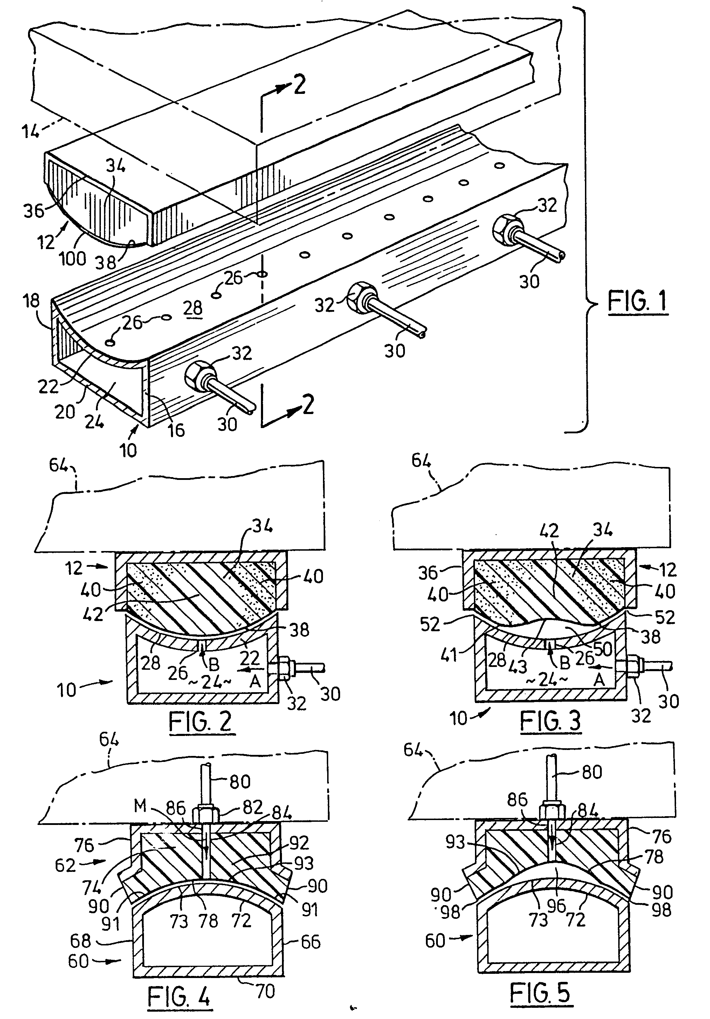

In the first embodiment of the invention as illustrated in Figures 1 to 3, there is disclosed a track 10, a load bearing shoe 12, and a bed 14, shown in ghost outlines, of a vehicle being supported by the load bearing shoe 12. The track 10 has side walls 16 and 18, base 20, and upper wall 22 which define a track plenum 24. Upper wall 22 has orifices 26 connecting track plenum 24 with upper surface 28 of upper wall 22.

Supply lines 30 attach to side wall 16 of track 10 by means of conventional pressure fittings 32. Supply lines 30 supply pressurized fluid, such as air, through pressure fittings 32 into track plenum 24. In this manner track plenum 24 is pressurized.

Load bearing shoe 12 comprises deformable body portion 34 housing 36 and lower surface 38. Deformable body portion 34 is located within and below housing 36 and is attached thereto. Housing 36 in turn is attached to bed 14 shown in ghost outlines.

As shown in Figure 2, in its undeformed state, lower surface 38 of deformable body portion 34 of load bearing shoe 12 is convex, upper surface 28 of upper wall 22 is concave, and both lower surface 38 and upper surface 28 have substantially the same radius of curvature in cross-section. Deformable body portion 34 is composed of two types of material indicated as 40 at the side edge regions and 42 at an intermediate region. The material located at side edge regions 40 and indicated by the dots in Figures 2 and 3 is stiffer and less compliant than the material located at the intermediate region 42 and indicated without dots in Figures 2 and 3.

As depicted in Figure 2, supply lines 30 supply pressurized fluid, depicted as arrow A into track plenum 24, which becomes pressurized. As the track plenum 24 is pressurized, the pressurized fluid will escape through orifices 26 located in upper wall 22 of track 10. The escaping pressurized fluid is indicated by arrow B in Figure 2.

As depicted in Figure 3, under the influence of pressurized fluid escaping from track plenum 24 through orifices 26 intermediate region 42 of deformable body portion 34 deforms, and intermediate region 43 of lower surface 38 deflects away from upper surface 28 of track 10 to form plenum 50. Side edge regions 40 of deformable body portion 34 are less compliant and therefore side edge regions 40 of deformable body portion 34 do not deform as much as intermediate region 42 of deformable body portion 34. As a result, side edge regions 41 of lower surface 38 of deformable body portion 34 do not deflect away from upper surface 28 of track 10. Partial seals 52 are formed between each side edge region 41 o lower surface 38 and upper surface 28 of track 10.

Also aiding formation of partial seals 52 is the acceleration of the pressurized fluid as it escapes from plenum 50 through partial seals 52. This acceleration will cause a localized pressure drop, which in turn will reduce the amount of deflection of lower surface 38 of deformable body portion 34 at side edge regions 40, which in turn narrows the gap of partial seals 52. Narrowing the gap of partial seals 52 will serve to maintain pressure in the plenum 50, but, in addition, an equilibrium will be reached and the gap of partial seals 52 will remain constant for a given pressure in plenum 50. In this sense, the cushion of pressurized fluid contained in plenum 50 is self-maintaining.

In a second preferred embodiment depicted in Figures 4 and 5, there is disclosed a track 60, a load bearing shoe 62 and a bed 64, shown in ghost outlines, of a vehicle being supported by load bearing shoe 62. The track 60 has side walls 66 and 68, base 70 and upper wall 72. Upper wall 72 has upper surface 73 which is convex in cross section. Load bearing shoe 62 comprises deformable body portion 74, housing 76 and lower surface 78. Deformable body portion 74 is located within and below housing 76 and is attached thereto. Housing 76 in turn is attached to bed 64, shown in ghost outlines. Lower surface 78 is concave in cross-section and is of substantially similar radius of curvature in cross section as upper surface 73 of track 62.

Supply lines 80 supply pressurised fluid, such as air, through pressurized fittings 82 attached to housing 76. Bore 84 is located in deformable body portion 74 and communicates with orifice 86 located in housing 76. Pressurized fluid, as indicated by arrow M, is supplied between upper surface 73 of track 64 and lower surface 78 of deformable body portion 74 through supply line

0225724

80 then through orifice 86 and finally through bore 84.

As shown in Figures 4 and 5, deformable body portion 74 is composed of one homogeneous compliant material which has consistent properties of deformation throughout. Deformable body portion has side edge regions 90, and an intermediate region 92. The deformable body portion 74 is much thicker in vertical section at intermediate region 92 then at side edge regions 90. Housing 76 is adapted to conform to the varying thickness of deformable body portion 74.

Because there is less compliant material at side edge regions 90 of deformable body portion 74, side edge regions 91 of lower surface 78 do not deflect away from upper surface 73 of track 60 as much as intermediate region 93 of lower surface 78. Therefore, when pressurized fluid, such as air, is introduced between lower surface 78 and upper surface 73, lower surface 78 deflects to form a plenum 96. As more pressurized fluid is supplied into plenum 96, load bearing shoe 62 lifts off the track 72. As shown in Figure 5, between side edge regions 91 of lower surface 78, and upper surface 73 of track 60, partial seals 98 are formed which limit the movement of pressurized fluid escaping from plenum 96. As more fully described with respect to the first embodiment, but equally applicable to the second embodiment, the acceleration of pressurized fluid through partial seals 98 will assist in controlling and maintaining the partials seals 98, and thereby maintain the cushion of pressurized fluid contained in plenum 96.

It is anticipated that when the load bearing shoe 12 or 62 is in use, and the vehicle is moving along the track 10 or 60

- 8 -

0225724

occasional contact will be made between the load bearing shoe 12 or 62 and the track 10 or 60. Therefore, it may be desireable to employ a friction reducing cover 100, as depicted in Figure 1, because certain compliant materials such as rubber have very high coefficients of sliding frictional resistance.

It will of course be appreciated by those skilled in the art, that both preferred embodiments referred to above have advantages over prior devices which advantages arise from the fact that each shoe 12 or 62 is compliant across its width. Specifically, the shoe 12 or 62 acts as a primary ride cushioning mechanism, or shock absorber, which is especially useful in transportation systems for transporting people. Also, the compliant side edge regions 41 and 91 deflect to form partial seals 52 and 98. Because the side regions 41 and 91 are compliant, they are capable of overcoming minor surface irregularities, without a loss of the pressure in the plenum 50 or 96, (the self maintaining feature as previously described). These advantages make the present invention particularly suitable for use in mass-transportation systems.

From the foregoing teachings it will be apparent that by varying the type of compliant material across the load bearing shoe, or by varying the geometry of the deformable body portion of the load bearing shoe, the lower surface of the deformable body portion can be made more compressible at the intermediate region that at side edge regions. It will also be apparent that the desired properties of deformation of the lower surface of the load bearing shoe can be obtained by any suitable combination of geometry and variance of material .

CLAIMS

1. A load bearing shoe for supporting a load on a cushion of pressurized fluid between said shoe and a track, at least one of said shoe and said track being adapted to inject fluid under pressure between said shoe and said track,

said shoe having a surface adapted to co-operate with said track when said shoe is in use,

said shoe having first and second side edge regions, and at least one intermediate region,

said intermediate region having a greater compressibility than said first and second side edge regions,

so that, said surface of said shoe, when said shoe is in use, deflects to form a plenum between said surface and said track to accommodate said cushion of pressurized fluid, and said first and second side edge regions form a partial seal between said surface and said track to limit movement of said fluid from said plenum.

2. The shoe of claim 1 further comprised of,

A first deformable material at said intermediate region, and, a second deformable material at said side edge regions,

the compressibility of said first deformable material being greater than the compressibility of said second deformable material,

so that, when said shoe is in use, said first deformable material of said shoe compresses to form a plenum between said shoe and said track to accommodate said cushion of pressurized fluid.

3. The shoe of claim 2 wherein said pressurized fluid is air.

4. The shoe of claim 3 wherein the track is adapted to inject air under pressure between said shoe and said track.

5. The shoe of claim 3 wherein the shoe is adapted to inject air under pressure between said shoe and said track.

6. The shoe of claim 2, wherein said shoe has a friction reducing cover, and said cover has a lower co-efficient of sliding frictional resistance than said shoe.

7. A load bearing shoe for supporting a load on a cushion of pressurized fluid between said shoe and a track, one of said shoe and said track being adapted to inject fluid under pressure between said track and said shoe, said shoe having,

a housing, and

a deformable body portion,

said body portion being within said housing and below said housing,

said body portion having first and second side edge regions, and at least one intermediate region,

said body portion having a surface adapted to co-operate with said track and overlying said first and second side edge regions, and said intermediate region,

said body portion having a greater compressibility at said intermediate region than at said side edge regions,

so that, said body portion compresses at said intermediate region, and said surface deflects to form a plenum between said shoe and said track to accommodate said cushion of pressurized fluid said housing forming in combination with said first and second side edge regions a partial seal to limit the movement of said fluid from said plenum.

8. The shoe of claim 7 wherein said pressurized fluid is air.

9. The shoe of claim 8 wherein said shoe is adapted to inject air under pressure between said shoe and said track.

10. The shoe of claim 8 wherein said track is adapted to inject air under pressure between said shoe and said track.

11. The shoe of claim 7, wherein said shoe has a friction reducing cover, and said cover has a lower co-efficient of sliding frictional resistance than said shoe.

12. A load bearing shoe for supporting a load on a cushion of pressurized air between said shoe and a track, said track being adapted to inject air under pressure between said track and said shoe,

said shoe being generally concave in lateral cross-section,

said track being generally convex in lateral cross-section,

said shoe co-operating with said track,

said shoe having,

a housing, and

a deformable body portion,

said body portion being within said housing,

said body portion having a concave surface adapted to co-operate with said convex track and overlying first and second side edge regions and an intermediate region,

said body portion having a greater compressibility at said intermediate region than at said side regions,

so that said body portion compresses at said intermediate region and said surface deflects to form a plenum between said shoe and said track to accommodate said cushion of pressurized fluid said housing forming in combination with said first and second side edge regions a partial seal to limit the movement of said fluid from said plenum.

13. A method of supporting a load on a load supporting shoe, in a transportation system having vehicles guided by tracks, on a cushion of pressurized fluid between said shoe and said track, said shoe having a surface adapted to co-operate with said track when said shoe is in use, said surface comprising first and second side edge regions and at least one intermediate region, said surface having a greater compressibility at said intermediate region than at said side edge regions, which method comprises,

a) injecting pressurized fluid between said surface of said load supporting shoe and said track,

b) compressing said intermediate region of said shoe and deflecting said surface of said shoe to form a plenum to accommodate said pressurized fluid, and

c) forming partial seals at said first and second side edge regions of said surface of said shoe to limit movement of said pressurized fluid from said plenum.

14. A method as recited in claim 13, where said pressurized fluid is air.

15. A method, as recited in claim 13, wherein the step of forming partial seals includes mounting the shoe under a housing.

FIG. 1

FIG. 2

FIG. 3

FIG. 4

FIG. 5

European Patent Office

**EUROPEAN SEARCH REPORT**

. Application number

| | DOCUMENTS CONSIDERED TO BE RELEVANT | | | EP 86308674.0 |
|---|---|---|---|---|
| Category | Citation of document with indication, where appropriate, of relevant passages | | Relevant to claim | CLASSIFICATION OF THE APPLICATION (Int. Cl.4) |
| D,Y | US - A - 3 952 666 (GLADISH)<br> * Fig. 1,2 * | | 1,13,<br>14 | B 60 V 3/04 |
| D,A | | | 3-5,7-<br>10,12 | |
| | -- | | | |
| D,Y | US - A - 3 375 893 (MACKIE)<br> * Fig. 3,4 * | | 1,14 | |
| D,A | | | 3-5,7-<br>10,12 | |
| | -- | | | |
| A | US - A - 3 493 070 (BERTIN)<br> * Fig. 3 * | | 1,3,5,<br>7-9,<br>12-14 | |
| | -- | | | |
| A | US - A - 4 538 699 (KUTSCHER)<br> * Fig. 1 * | | 1,5,7,<br>9,12,<br>13 | **TECHNICAL FIELDS SEARCHED (Int. Cl.4)** |
| | ---- | | | B 60 V<br>B 65 G |

The present search report has been drawn up for all claims

| Place of search | Date of completion of the search | Examiner |
|---|---|---|
| VIENNA | 23-01-1987 | BAUMGARTNER |